# EUROPÄISCHE PATENTANMELDUNG

(11) **EP 1 647 253 A1**
(43) Veröffentlichungstag der Anmeldung: **19.04.2006**
(21) Anmeldenummer: 05108453.1
(22) Anmeldetag: 15.09.2005
(51) Int. Cl.: A61G 17/08, A01G 5/04

(54) **Einrichtung zum Tragen und Abstellen einer Urne**

(30) Priorität: 15.10.2004 DE 202004015968 U; 03.02.2005 DE 102005005010
(71) Anmelder: Schwarzenberg, Hans-Josef, 33175 Bad Lippspringe (DE)
(72) Erfinder: Schwarzenberg, Hans-Josef, 33175 Bad Lippspringe (DE)
(74) Vertreter: Dantz, Jan Henning

(57) **Zusammenfassung**

Eine Einrichtung zum Tragen und Abstellen einer Urne, mit einem Kranzteil (1) und einem, dessen Mittenöffnung verschließenden Tragteil (2), ist so ausgebildet, dass das Tragteil (2) lösbar mit dem Kranzteil (1) verbunden ist.

## Beschreibung

Die vorliegende Erfindung betrifft eine Einrichtung zum Tragen und Abstellen einer Urne, mit einem Kranzteil und einem dessen Mittenöffnung verschließenden Tragteil.

Derartige Einrichtungen kommen insbesondere dann zum Einsatz, wenn nach einer Feuerbestattung die Urne beigesetzt werden soll. Dabei dient die Einrichtung sowohl dem Transport als auch dem Abstellen der Urne am Grab vor deren Beisetzung.

Bekannt sind solche Einrichtungen, die eine geschlossene Grundplatte aufweisen, gegebenenfalls mit einem außenseitig umlaufenden Rand, der eine seitliche Fixierung für einen Blumensteckschaum oder dergleichen bildet, der als Ring eingelegt und mit Blumen besteckt werden kann.

Der so gebildete Kranz ist im Bereich seiner Mittenöffnung durch die Grundplatte vollständig verschlossen, die sich, wie erwähnt, bis zum Außenrand erstreckt.

Die Grundplatte besteht aus einem Kunststoff oder vorzugsweise einem Faserguss, wobei letzterer sich durch seine gute Verrottbarkeit auszeichnet.

Zur Bestattung der Urne wird diese aus der Einrichtung genommen und im Grab beigesetzt, so dass die Einrichtung mit der nun sichtbaren Grundplatte verbleibt und aufgrund ihres dann unschönen Aussehens üblicherweise entsorgt wird. Zu bemerken ist noch, dass der Durchmesser des Mittenloches etwa dem Durchmesser der Urne entspricht, so dass die Grundplatte bei eingestellter Urne nicht sichtbar ist.

Der vorliegenden Erfindung liegt die Aufgabe zugrunde, eine Einrichtung der gattungsgemäßen Art so weiter zu entwickeln, dass sie mit konstruktiv geringem Aufwand vielseitiger verwendbar ist.

Diese Aufgabe wird durch eine Einrichtung gelöst, die die Merkmale des Anspruchs 1 aufweist.

Durch diese konstruktive Ausbildung ist eine Einrichtung geschaffen, die weit über die bislang mögliche Verwendungsfähigkeit hinausgeht.

So kann diese Einrichtung nicht nur zum Transport der Urne vom Ort der Aufbahrung hin zum Ort der Bestattung dienen, wobei der geschmückte Kranz, der die Urne umfänglich umgibt, den Bedürfnissen der Trauernden sehr entgegen kommt, sondern auch nach erfolgter Bestattung als Einzelkranz, da dann das Tragteil, das bislang durch die Grundplatte gebildet war, aus dem Verbund mit dem Kranzteil gelöst werden kann.

Danach stellt sich ein vollwertiger Kranz dar, der ohne weiteres als Grabschmuck dienen kann.

Auch das Tragteil bekommt durch die Erfmdung eine zusätzliche Zweckbestimmung, nämlich die, dass es eigenständig als Untersatz für die aufgestellte Urne fungieren kann.

Dabei kann das Tragteil als Schale ausgebildet sein, die einen umlaufenden Rand aufweist, der praktisch einen Flansch bildet für Befestigungsmittel, mit denen das Tragteil am Kranzteil befestigbar ist.

Die Befestigung selbst kann beispielsweise mit Steckstiften erfolgen, die von der Innenseite des Tragteiles her radial nach außen in das Kranzteil eingesteckt werden, unter Durchdringung des aus dem Faserguss oder Kunststoff bestehenden Schalenmaterial.

Neben dem erwähnten Außenrand kann das Kranzteil einen Innenrand aufweisen, an dem der Rand des Tragteiles anliegt und der gemeinsam mit dem Außenrand eine ringförmige Rinne bildet, in die der aus Blumensteckschaum bestehende Ring eingesetzt ist.

Zweckmäßiger Weise sind die Steckstifte in diesen Blumensteckschaum geführt, so dass sich ein fester Verbund des gesamten Kranzteiles mit dem Tragteil ergibt.

An Stelle der Steckstifte sind auch andere Befestigungsmöglichkeiten denkbar, beispielsweise Klipse, miteinander korrespondierende Rastelemente oder dergleichen, wobei letztere sich dann anbieten, wenn sowohl das Tragteil als auch das rinnenförmige, den Blumensteckschaum aufnehmende Ringteil aus Kunststoff bestehen.

Nach einem weiteren Gedanken der Erfindung ist vorgesehen, am Kranzteil unterseitig verschwenkbare Laschen anzuordnen, die bei eingesetztem Tragteil in den Bereich der Mittenöffnung verschwenkt sind und auf denen das Tragteil aufliegt.

Zur Entnahme des Tragteiles werden die Laschen in den Überdeckungsbereich des Kranzteiles verschwenkt, so dass das Kranzteil nach oben hin vom Tragteil abgenommen werden kann.

Auch das Einsetzten des Tragteiles erfolgt bei eingeschwenkter Stellung der Laschen und anschließendem Ausschwenken in den Bereich der Mittenöffnung.

Der lichte Durchmesser der Mittenöffnung im oberen, freien Randbereich, die durch den Innenrand begrenzt ist, ist kleiner als der zugeordnete Außendurchmesser des Tragteiles, so dass dieses bei Unterstützung durch die Laschen in axialer Richtung gesichert ist und während des Tragens als Gesamteinheit, also mit eingestellter Urne, nicht verrutschen kann. Ebenso ist eine Sicherung des Tragteiles bei Nichtgebrauch geschaffen, so dass das Tragteil bspw. zum Transport der Einrichtung verliergesichert ist.

Die Laschen sind durch geeignete Befestigungsmittel mit dem Kranzteil verbunden, wobei Niete sich als besonders geeignet herausgestellt haben. Dabei werden die Nietköpfe auf der den Laschen gegenüber liegenden Seite an der Innenfläche des Bodens des Kranzteiles mit einer Scheibe unterlegt, die gegenüber dem Boden gegebenenfalls noch abgedichtet ist, zumindest jedoch eine so satte Anlage am Nietkopf einerseits und am Boden des Kranzteiles andererseits bildet, dass keine nennenswerte Feuchtigkeit in die Durchstecköffnung für die Nieten im Boden eindringen kann. Das aus einem verrottbaren Material bestehende Kranzteil bleibt somit in seiner Haltbarkeit zumindest für die Dauer des zweckbestimmten Gebrauchs unbeschädigt.

Stattdessen besteht die Möglichkeit, an der Unterseite des Kranzteiles Führungsschienen zu befestigen, in der eine Platte verschiebbar gehalten wird. Diese Platte bildet das Tragteil und kann zum Absetzen der Urne aus den Führungsschienen herausgezogen werden.

In einer modifizierten Form weist die Platte, die beidseitig über das Kranzteil vorsteht, Griffe auf, so dass die gesamte Einrichtung, einschließlich einer auf der Platte abgestellten Urne problemlos getragen werden kann.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: eine erfindungsgemäße Einrichtung in einer perspektivischen Ansicht
- Figur 2: einen Schnitt durch die Einrichtung gemäß der Linie II - II in Figur 1
- Figur 3: ein weiteres Ausführungsbeispiel der Erfindung in einer perspektivischen Ansicht
- Figur 4: einen Schnitt durch die Einrichtung gemäß der Linie IV - IV in Figur 3
- Figur 5: ein weiteres Ausführungsbeispiel der Erfindung in einer perspektivischen Ansicht
- Figur 6: einen Schnitt durch die Einrichtung nach der Linie VI - VI in Figur 5
- Figur 7: eine Einzelheit der Erfindung gemäß ein weiteres Ausführungsbeispiel der Einzelheit gemäß Figur 6

In den Figuren ist eine Einrichtung zum Tragen und Abstellen einer Urne dargestellt, die ein Kranzteil 1 aufweist, mit einem im Querschnitt muldenförmigen Aufnahmeteil 3, das außenseitig durch einen Außenrand 5 und innenseitig durch einen Innenrand 6 begrenzt ist und in den ein Blumensteckring 4 eingelassen ist, der höher ist als die Tiefe des Aufnahmeteiles 3. Dieser Blumensteckring 4 besteht aus einem Blumensteckschaum und kann mit Schnittblumen oder dergleichen bestückt werden.

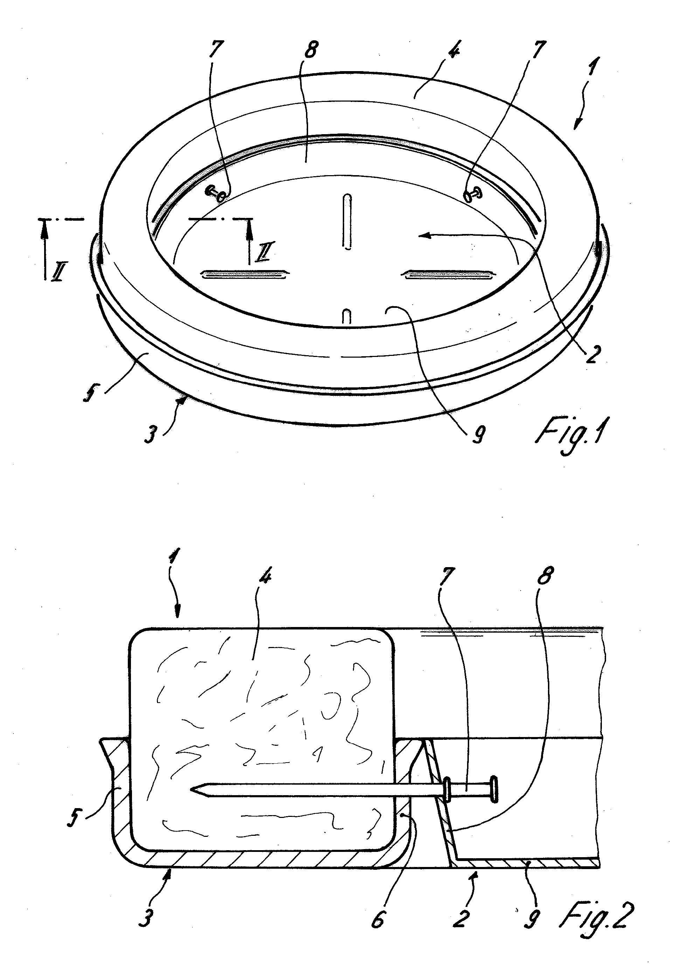

Die durch den Innenrand 6 begrenzte Mittenöffnung des Kranzteiles 1 ist bei den in den Figuren 1 bis 4 gezeigten Beispielen ausgefüllt durch ein Tragteil 2, das schüsselartig ausgebildet ist und einen Rand 8 aufweist, der an dem Innenrand 6 des Aufnahmeteiles 3 anliegt.

Das Tragteil 2, auf dessen Boden 9 eine Urne abstellbar ist, ist lösbar mit dem Kranzteil 1 verbunden.

Hierzu sind bei dem Ausführungsbeispiel nach den Figuren 1 und 2 über den Umfang vorzugsweise gleichmäßig verteilt Steckstifte 7 vorgesehen, die ausgehend von dem Tragteil 2 sich radial erstreckend in das Kranzteil 1 eingesteckt sind, unter Durchdringung des Randes 8, des Innenrandes 6 und Eindringen in den Blumensteckring 4. Jeder Steckstift 7 ist mit einem Griffstück versehen, das in den Innenraum des Tragteiles 2 ragt und an dem der jeweilige Steckstift zum Herausziehen ergriffen werden kann.

Der Rand 8 verläuft etwas geneigt zum Boden 9 des Tragteiles 2, so dass sich der Innenraum des Tragteiles 2 zu seiner offenen Seite hin erweitert. Hierdurch wird eine einfache Entnahme des Tragteiles 2 aus dem Kranzteil 1 bzw. ein Abnehmen des Kranzteiles 1 vom Tragteil 2 gewährleistet. Die Höhe des Randes 8 und des Innenrandes 6 sind bei dieser Ausführung etwa gleich.

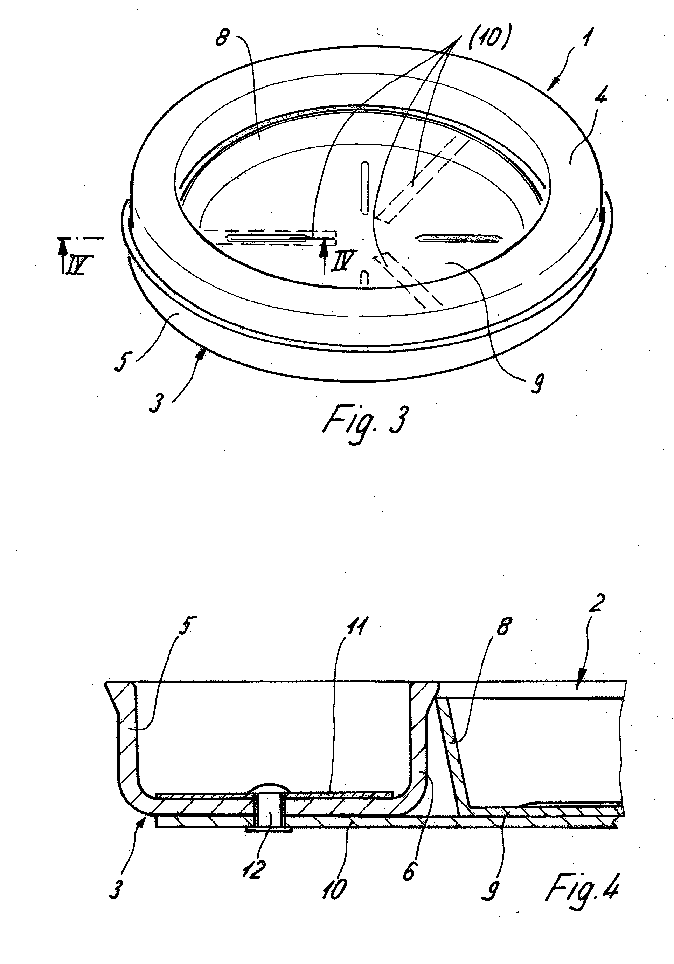

Bei dem in den Figuren 3 und 4 gezeigten Ausführungsbeispiel sind an der Unterseite des Aufnahmeteiles 3 verschwenkbare Laschen 10 befestigt und zwar im gleichen Winkelabstand zueinander bei dieser Ausführung 3, also jeweils im Winkel von 120°.

Diese Laschen 10 sind jeweils mit einem Niet 12 am Aufnahmeteil 3 festgelegt, wobei auf der der Lasche 10 gegenüber liegenden Seite, sozusagen der Innenseite des Bodens, eine Scheibe 11 vorgesehen, auf der sich der zugeordnete Kopf des Niets 12 abstützt. Diese Scheibe 11 kann gegenüber der Bodenfläche des Aufnahmeteiles 3 noch weitgehend flüssigkeitsdicht abgedichtet sein. Im übrigen liegt der Kopf des Nietes 12 so satt an der Scheibe 11 an, dass zum einen eine gewisse Dichtwirkung erzielt wird und zum anderen eine Selbsthemmung, so dass die Lasche 10, die ebenfalls unter Spannung an dem Aufnahmeteil 3 anliegt, insoweit in der eingestellten Position fixiert ist, trotzdem gegen einen Reibwiderstand verschwenkbar ist.

In den Figuren 3 und 4 ist eine Position der Laschen 10 gezeigt, in der sie das Tragteil 2 stützen.

Durch Verschwenken der Laschen 10 in einen Bereich unterhalb des Aufnahmeteiles 3 kann das Tragteil 2 entweder eingesetzt oder entnommen werden.

Um zu verhindern, dass das Tragteil 2 durch die den Laschen 10 gegenüber liegende Öffnung der Mittenöffnung herausfällt, weist der Innenrand 6 an seinem freien Ende eine Verdickung auf, durch die ein lichter Durchmesser des der Mittenöffnung gebildet wird, der kleiner ist als der Außendurchmesser des Tragteiles 2. Der freie Rand des Tragteiles 2 liegt an dieser Verdickung des Innenrandes 6 an.

Die in den Figuren 3 und 4 gezeigte Ausführungsvariante zeichnet sich insbesondere dadurch aus, dass sie eine sehr hohe Stabilität bei der Aufnahme der Urne bietet und trotzdem besonders einfach hinsichtlich der Handhabung beim Einsetzen bzw. entnehmen des Tragteiles 2 ist.

Zur Erreichung der hohen Tragfähigkeit trägt auch bei, dass, wie besonders deutlich in der Figur 4 erkennbar ist, die Laschen 10 in ausgeschwenkter Stellung bis in den äußeren Randbereich des Aufnahmeteiles 3 geführt sind, wodurch sich eine geringe Flächenpressung ergibt, die durch das Gewicht einer eingesetzten Urne und dem draus resultierenden Drehmoment wirksam ist.

Zweckmäßiger Weise ist der Niet 12 etwa im Mittenbereich des Aufnahmeteiles 3 angeordnet, so dass die Lasche 10 in eingeschwenkter Stellung vom Boden des Aufnahmeteiles 3 überdeckt wird. Hierzu muss selbstverständlich die Lasche 10 in ihrer Breite und Länge entsprechend dimensioniert sein.

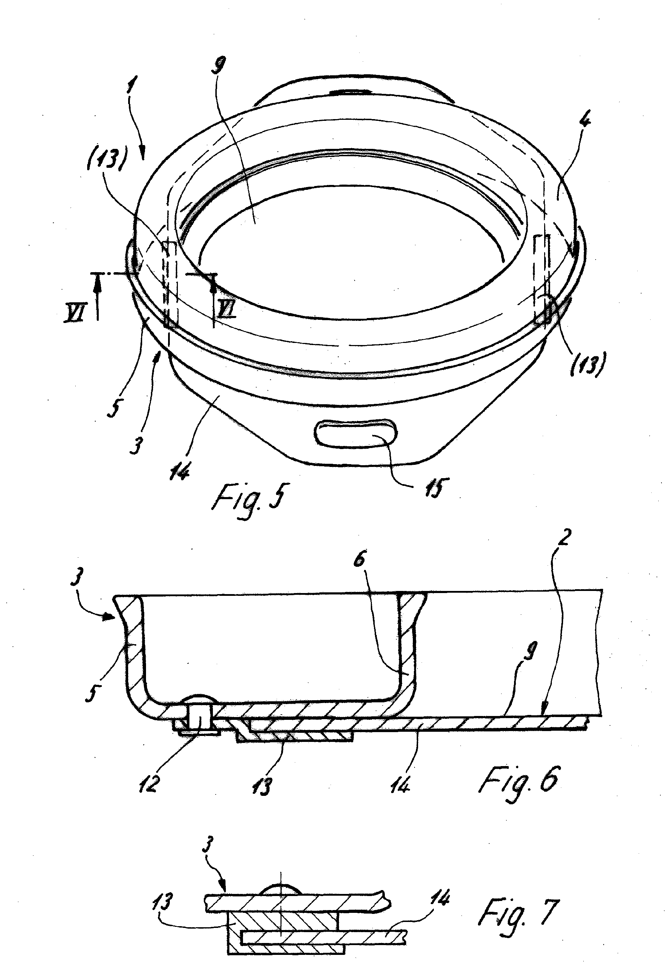

Auch die Einrichtung entsprechend den Abbildungen der Figuren 5, 6 und 7 zeichnet sich durch eine hohe Stabilität aus. Hierbei sind sich gegenüber liegend und parallel zueinander verlaufend an der Unterseite des Aufnahmeteiles 4 Führungsschienen 13 angebracht und zwar ebenfalls mit Nieten 12 befestigt. Diese Führungsschienen 13 sind dem Beispiel nach Figur 6 im Querschnitt etwa Z-förmig ausgebildet, während in Figur 7 die Führungsschienen 13 U-förmig gestaltet und mit dem Kranzteil 3 verschraubt sind. In Ihnen ist eine Platte 14 längsverschiebbar geführt, die das Tragteil 2 bildet.

Die Führungsschienen 13, die in ihrer Länge so bemessen sind, dass sie vom Aufnahmeteil 3 überdeckt werden, sind so dimensioniert, dass der Abstand des die Platte 14 tragenden Schenkels zur Unterseite des Aufnahmeteiles 3 bzw. der beiden Schenkel der U-förmigen Führungsschiene 13 gleichgroß bzw. geringfügig kleiner ist als die Dicke der Platte 14, so dass diese unter einem gewissen Reibschluss an dem Aufnahmeteil 3 anliegt und nicht verrutschen kann.
Durch seitliche Anlage in den Führungsschienen 13 ist die Platte gegen ein seitliches Verschieben gesichert.

An den das Aufnahmeteil seitlich überragenden Endbereichen ist die Platte 14 mit Grifföffnungen 15 versehen, so dass die gesamte Einrichtung, einschließlich einer abgestellten Urne bequem tragbar ist.

An Stelle der gezeigten Profile sind selbstverständlich auch andere Querschnittsformen der Führungsschienen 13 denkbar, die geeignet sind, die Platte 14 längsverschiebbar aufzunehmen.

### Bezugszeichenliste

- 1: Kranzteil
- 2: Tragteil
- 3: Aufnahmeteil
- 4: Blumensteckring
- 5: Außenrand
- 6: Innenrand
- 7: Steckstift
- 8: Rand
- 9: Boden
- 10: Lasche
- 11: Scheibe
- 12: Niet
- 13: Führungsschiene
- 14: Platte
- 15: Grifföffnung

## Patentansprüche

1. Einrichtung zum Tragen und Abstellen einer Urne, mit einem Kranzteil (1) und einem, dessen Mittenöffnung verschließenden Tragteil (2), **dadurch gekennzeichnet, dass** das Tragteil (2) lösbar mit dem Kranzteil (1) verbunden ist.

2. Einrichtung nach Anspruch 1, **dadurch gekennzeichnet, dass** das Kranzteil (1) ein Aufnahmeteil (3) aufweist, das im Querschnitt rinnenartig ausgebildet ist und dessen sich gegenüberliegende Seitenwände durch einen Außenrand (5) und einen Innenrand (6) gebildet sind.

3. Einrichtung nach Anspruch 1 oder 2, **dadurch gekennzeichnet, dass** in das Aufnahmeteil (3) ein Blumensteckring (4) eingesetzt ist.

4. Einrichtung nach einem der vorhergehenden Ansprüche, **dadurch gekennzeichnet, dass** die Höhe des Blumensteckringes (4) größer ist als die Tiefe des Aufnahmeteiles (3).

5. Einrichtung nach einem der vorhergehenden Ansprüche, **dadurch gekennzeichnet, dass** das Tragteil (2) schüsselartig ausgebildet ist und einen umlaufenden Rand (8) sowie einen Boden (9) aufweist.

6. Einrichtung nach einem der vorhergehenden Ansprüche, **dadurch gekennzeichnet, dass** der Rand (8) in seiner Höhe etwa der Höhe des Innenrandes (6) entspricht.

7. Einrichtung nach einem der vorhergehenden Ansprüche, **dadurch gekennzeichnet, dass** der Rand (8) zumindest teilweise am Innenrand (6) anliegt.

8. Einrichtung nach einem der vorhergehenden Ansprüche, **dadurch gekennzeichnet, dass** der Rand (8) zum Boden (9) geneigt verläuft, so dass der Innenraum des Tragteiles (2) sich zur offenen Seite hin erweitert.

9. Einrichtung nach einem der vorhergehenden Ansprüche, **dadurch gekennzeichnet, dass** zur lösbaren Verbindung des Tragteiles (2) in dem Kranzteil (3) Steckstifte (7) vorgesehen sind, die den Rand (8) des Tragteiles (2), den Innenrand (6) des Aufnahmeteiles (3) durchtreten und in dem Blumensteckring (4) zumindest teilweise eingeführt sind.

10. Einrichtung nach einem der vorhergehenden Ansprüche, **dadurch gekennzeichnet, dass** jeder Steckstift (7) ein Griffstück aufweist, das in den Innenraum des Tragteiles (2) ragt.

11. Einrichtung nach einem der vorhergehenden Ansprüche, **dadurch gekennzeichnet, dass** zur lösbaren Verbindung des Tragteiles (2) mit dem Kranzteil (3) miteinander korrespondierende Rastmittel vorgesehen sind.

12. Einrichtung nach einem der vorhergehenden Ansprüche, **dadurch gekennzeichnet, dass** an der Unterseite des Aufnahmeteiles mehrere schwenkbare Laschen (10) angeordnet sind, an denen in ausgeschwenkter Stellung das Tragteil (2) aufliegt.

13. Einrichtung nach einem der vorhergehenden Ansprüche, **dadurch gekennzeichnet, dass** drei Laschen (10) vorgesehen sind.

14. Einrichtung nach einem der vorhergehenden Ansprüche, **dadurch gekennzeichnet, dass** die Laschen (10) in gleichem Winkelabstand zueinander angeordnet sind.

15. Einrichtung nach einem der vorhergehenden Ansprüche, **dadurch gekennzeichnet, dass** die Laschen (10) mittels jeweils eines Nietes (12) mit dem Aufnahmeteil (3) verbunden sind.

16. Einrichtung nach einem der vorhergehenden Ansprüche, **dadurch gekennzeichnet, dass** auf der der jeweiligen Lasche (10) gegenüber liegenden Seite am Boden des Aufnahmeteiles (3) eine Scheibe (11) aufliegt, auf der sich der Kopf des Nietes (12) abstützt.

17. Einrichtung nach einem der vorhergehenden Ansprüche, **dadurch gekennzeichnet, dass** die Scheibe (11) und/oder der Niet (12) zum Aufnahmeteil (3) hin abgedichtet ist.

18. Einrichtung nach einem der vorhergehenden Ansprüche, **dadurch gekennzeichnet, dass** die Laschen (10) selbsthemmend gelagert sind.

19. Einrichtung nach einem der vorhergehenden Ansprüche, **dadurch gekennzeichnet, dass** sich die Laschen (10) in ausgeschwenkter Stellung bis in den äußeren Randbereich des Aufnahmeteiles (3) erstrecken.

20. Einrichtung nach einem der vorhergehenden Ansprüche, **dadurch gekennzeichnet, dass** jeder Niet (12) etwa im Mittenbereich des Bodens des Aufnahmeteiles (3) angeordnet ist.

21. Einrichtung nach einem der vorhergehenden Ansprüche, **dadurch gekennzeichnet, dass** der lichte Durchmesser des Aufnahmeteiles (3) in dem durch den freien Rand des Innenrandes (6) bestimmten Bereich kleiner ist als der zugeordnete Außendurchmesser des Tragteiles (2).

22. Einrichtung nach einem der vorhergehenden Ansprüche, **dadurch gekennzeichnet, dass** der freie Randbereich des Innenrandes (6) zur Mittenöffnung hin verdickt ist.

23. Einrichtung nach einem der vorhergehenden Ansprüche, **dadurch gekennzeichnet, dass** das Aufnahmeteil (3) und/oder das Tragteil (2) aus einem Faserguss oder Kunststoff bestehen.

24. Einrichtung nach einem der vorhergehenden Ansprüche, **dadurch gekennzeichnet, dass** an der Unterseite des Aufnahmeteiles (3), im Bereich zweier sich gegenüber liegender Seiten, jeweils eine Führungsschiene (13) befestigt ist, die parallel zur anderen Führungsschiene (13) verläuft.

25. Einrichtung nach einem der vorhergehenden Ansprüche, **dadurch gekennzeichnet, dass** die Führungsschienen (13) in ihrer Länge so bemessen sind, dass sie von dem Aufnahmeteil (3) überdeckt sind.

26. Einrichtung nach einem der vorhergehenden Ansprüche, **dadurch gekennzeichnet, dass** in den Führungsschienen (13) eine das Tragteil (2) bildende Platte (14) längsverschiebbar gehalten ist.

27. Einrichtung nach einem der vorhergehenden Ansprüche, **dadurch gekennzeichnet, dass** die Platte (14) reibschlüssig in den Führungsschienen (13) einliegt.

28. Einrichtung nach einem der vorhergehenden Ansprüche, **dadurch gekennzeichnet, dass** die Platte (14) das Aufnahmeteil (3) beidseitig überragt.

29. Einrichtung nach einem der vorhergehenden Ansprüche, **dadurch gekennzeichnet, dass** in den das Aufnahmeteil (3) überragenden Bereichen jeweils eine Grifföffnung (15) angeordnet ist.

30. Einrichtung nach einem der vorhergehenden Ansprüche, **dadurch gekennzeichnet, dass** die Führungsschienen (13) im Querschnitt Z-förmig ausgebildet sind.

31. Einrichtung nach einem der vorhergehenden Ansprüche, **dadurch gekennzeichnet, dass** die Platte (14) an der Unterseite des Aufnahmeteiles (3) und einem Schenkel der Führungsschienen (13) anliegt.

32. Einrichtung nach einem der vorhergehenden Ansprüche, **dadurch gekennzeichnet, dass** die Führungsschienen (13) im Querschnitt U-förmig ausgebildet sind.

33. Einrichtung nach einem der vorhergehenden Ansprüche, **dadurch gekennzeichnet, dass** die Nutenbereite der U-förmigen Führungsschienen (13) etwa der Dicke der Platte (14) entspricht.

34. Einrichtung nach einem der vorhergehenden Ansprüche, **dadurch gekennzeichnet, dass** die Platte (14) seitlich an den Führungsschienen (13) anliegt.
